Europäisches Patentamt

European Patent Office

Office européen des brevets

(19)

(11) Veröffentlichungsnummer: **0 474 652 B1**

(12) **EUROPÄISCHE PATENTSCHRIFT**

(45) Veröffentlichungstag der Patentschrift: **03.08.94**

(51) Int. Cl.5: **F02D 41/14**

(21) Anmeldenummer: **90906883.5**

(22) Anmeldetag: **14.05.90**

(86) Internationale Anmeldenummer:
**PCT/DE90/00346**

(87) Internationale Veröffentlichungsnummer:
**WO 90/15235 (13.12.90 90/28)**

(54) **VERFAHREN ZUM MESSEN VON LAUFUNRUHE BEI EINER BRENNKRAFTMASCHINE UND ANWENDUNG DER VERFAHREN.**

(30) Priorität: **02.06.89 DE 3917978**

(43) Veröffentlichungstag der Anmeldung:
**18.03.92 Patentblatt 92/12**

(45) Bekanntmachung des Hinweises auf die
Patenterteilung:
**03.08.94 Patentblatt 94/31**

(84) Benannte Vertragsstaaten:
**DE GB**

(56) Entgegenhaltungen:
**DE-A- 3 403 260**
**DE-A- 3 615 547**

**Tagungsbericht zum 8. Wiener Motorsymposium 1987, I. Geiger et al.: "Laufunruhe als Eingangsgrösse für Regelverfahren", Seiten 277 - 295**

**MTZ Motortechnische Zeitschrift, Band 39, Nrn. 7/8, 1978, V. Bianchi et al.: "Ein einfaches und objektives Messverfahren für die Laufunruhe", Seiten 303 - 309**

(73) Patentinhaber: **ROBERT BOSCH GMBH**
**Postfach 30 02 20**
**D-70442 Stuttgart(DE)**

(72) Erfinder: **KLENK, Martin**
**Stresemannstr. 11**
**D-7150 Backnang(DE)**
Erfinder: **MOSER, Winfried**
**Grundweinberge 14**
**D-7140 Ludwigsburg(DE)**

EP 0 474 652 B1

## Beschreibung

Die Erfindung betrifft ein Verfahren zum Messen von Laufunruhe bei einer Brennkraftmaschine. Laufunruhe entsteht in der Regel durch Zündaussetzer. Sie wird z. B. durch das Auftreten von Klopfgeräuschen an einem Klopfsensor oder durch starke Schwankungen des Brennraummitteldrucks festgestellt. Andere Verfahren nutzen Schwankungen in der Winkelgeschwindigkeit der Kurbelwelle. Um ein derartiges Verfahren geht es im vorliegenden Fall.

### Stand der Technik

Aus DE 25 07 138 (US-A-4,044,234) ist es bekannt, die Winkelgeschwindigkeit in einer vorgegebenen Winkelspanne vor dem oberen Totpunkt und die Winkelgeschwindigkeit in einer gleichen Winkelspanne nach dem oberen Totpunkt eines im Verbrennungstrakt befindlichen Zylinders zu messen. Fällt die Differenz zwischen den beiden Werten unter einen vorgegebenen Schwellenwert, wird hieraus gefolgert, daß die Verbrennung im überwachten Zylinder ausgefallen ist. Die genannte Differenzmessung wird für alle Zylinder einer Brennkraftmaschine einzeln ausgeführt. Dann, wenn einer der Differenzwerte unter den vorgegebenen Schwellenwert fällt, wird auf Aussetzer erkannt.

Messungen für einzelne Zylinder werden auch bei einem Verfahren ausgeführt, wie es in einem Artikel von I. Geiger et al. unter dem Titel "Laufunruhe als Eingangsgröße für Regelverfahren" im Tagungsbericht zum 8. Wiener Motorsymposium 1987, S. 277 - 295 beschrieben ist. Für jeden Zylinder wird jeweils eine Messung in einer Winkelspanne nach dem oberen Totpunkt für drei aufeinanderfolgende Verbrennungstakte V1 , V2 und V3 ausgeführt. Gemessen wird immer die Zeitspanne $T\_V1$ bzw. $T\_V2$ bzw. $T\_V3$, in der sich die Kurbelwelle um eine vorgegebene Winkelspanne dreht. Der Laufunruhewert LUW berechnet sich nach der folgenden Formel:

$$LUW = f(T) \times |(T\_V2 - T\_V1) - (T\_V3 - T\_V2)|, \quad (1)$$

mit: $f(T) = 1/T\_V1^3$ oder $= 1/(T\_V1 \times T\_V2 \times T\_V3)$

Der so berechnete Laufunruhewert wird in einer Leerlaufregelung verwendet.

Anders als mit dem vorstehend genannten Verfahren lassen sich Laufunruhewerte ermitteln, wenn in der oben angegebenen Gleichung (1) als Verbrennungstakte V1, V2 und V3, in denen Messungen ausgeführt werden, nicht aufeinanderfolgende Verbrennungstakte eines jeweils gleichen Zylinders, sondern direkt aufeinanderfolgende Verbrennungstakte verwendet werden. Ein entsprechendes Verfahren ist in einem Artikel von V. Bianchi et al. unter dem Titel "Ein einfaches und objektives Meßverfahren für die Laufunruhe"in MTZ 39/1978, Nr. 7/8, S. 1 - 5 beschrieben. Verfahren, die von den berechneten Laufunruhewerten Gebrauch machen, sind im genannten Artikel nicht konkret beschrieben.

Aber auch das eben genannte Verfahren führt in der Praxis immer wieder zu Fehlmeldungen, da sich Einflüsse von Straße und Getriebe als störend erwiesen. Es bestand daher seit langem das Problem, ein noch zuverlässigeres Meßverfahren für Laufunruhe anzugeben.

### Darstellung der Erfindung

Beim erfindungsgemäßen Verfahren werden die Laufunruhewerte LUW gemäß Gleichung (1) mit Zeitspannen für unterschiedliche Gruppen von Zylindern berechnet, der Maximalwert und der Minimalwert der berechneten Gruppen werden bestimmt und die Differenz zwischen Minimalwert und Maximalwert wird berechnet. Diese Maßnahme hat u.a. den Vorteil, daß Laufunruhe, wie sie durch Verbrennungsaussetzer verursacht wird, von Laufunruhe getrennt werden kann, wie sie durch Fahren auf stark holpriger Straße verursacht wird. In letzterem Fall können nämlich Winkelgeschwindigkeitsänderungen an der Kurbelwelle auftreten, die nach Frequenz und Amplitude Änderungen ähnlich sind, wie sie durch Verbrennungsaussetzer verursacht werden. Es steigen dann alle Laufunruhewerte über den herkömmlichen vorgegebenen Schwellenwert an. Wird jedoch die genannte Bestimmung von Maximal- und Minimalwert vorgenommen und die genannte Differenz gebildet, stellt sich heraus, daß die Höhe des Differenzwertes von Drehmomentänderungen weitgehend unabhängig ist, wie sie von den Antriebsrädern auf die Kurbelwelle übertragen werden, sondern daß dieser Differenzwert vielmehr im wesentlichen von Verbrennungsaussetzern abhängt.

Dabei werden die genannten Zeitspannen $T\_V1$, $T\_V2$ und $T\_V3$ für die Verbrennungstakte nicht benachbarter ungleicher Zylinder gemessen, vorzugsweise für solche, deren Anfang und Ende durch jeweils dieselbe Segmentmarke bestimmt ist. Der Vorteil des Verwendens ungleicher Zylinder wurde bereits beim Erläutern des Standes der Technik herausgestellt. Der Vorteil, nicht benachbarte Zylinder zu verwenden, liegt darin, daß die Winkelgeschwindigkeit der Kurbelwelle im Verbrennungstakt für einen nicht benachbarten Zylinder weniger von einem Verbrennungsaussetzer in einem vorhergehenden Zylinder beeinflußt ist, wenn der folgende Zylinder nicht der benachbarte Zylinder ist.

Es wird darauf hingewiesen, daß dann, wenn im vorstehenden und im folgenden von einem "benachbarten Zylinder" oder einem "folgenden Zylinder" die Rede ist, nicht jeweils der nächste Zylinder im Zylinderblock gemeint ist, sondern der nächste Zylinder in der Verbrennungstaktfolge. "Gegenüberliegende Zylinder" sind solche, deren Verbrennungstakte um 360° gegeneinander versetzt sind.

Werden als nicht benachbarte ungleiche Zylinder solche verwendet, bei denen die Winkelspannenmessung zwischen denselben Segmentmarken erfolgt, ist eine Meßwertverfälschung durch Toleranzen der Lagen der Segmentmarken auf einem sich mit der Kurbelwelle drehenden Geber ausgeschlossen.

Gemäß einem weiteren Verfahren wird für f(T) nicht der Wert $1/(T\_V1)^3$ oder der Wert $t/(T\_V1 \times T\_V2 \times T\_V3)$ verwendet, sondern f(T) ist der Faktor $1/T$ mit $T$ = eine der Zeiten $T\_V1$, $T\_V2$, $T\_V3$. Die mit Hilfe dieses Faktors f(T) gemäß Gleichung (1) berechneten Laufunruhewerte LUW werden in Anwendung des Meßverfahrens zur Aussetzererkennung mit betriebspunktabhängigen Schwellenwerten verglichen und es wird auf Aussetzer erkannt, wenn der Schwellenwert übertroffen wird. Wird das dritte Meßverfahren mit dem ersten Meßverfahren zur Aussetzererkennung gemeinsam angewendet, werden die Gruppenwerte mit Hilfe der genannten Funktion f(T) berechnet und die Differenzwerte werden mit betriebspunktabhängigen Schwellenwerten verglichen. Der Vorteil der Maßnahme dieses Verfahrens liegt darin, daß wegen der Betriebspunktabhängigkeit der Schwellenwerte die Laufunruheaussage zuverlässiger wird und darüber hinaus das Auswerten von Gleichung (1) für jeden Laufunruhewert vereinfacht wird.

Zeichnung

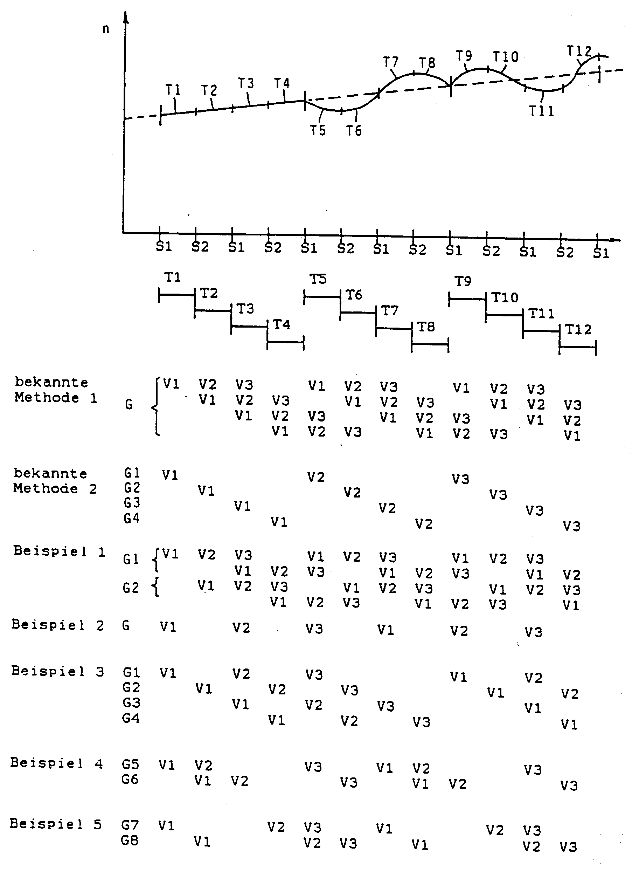

Die Zeichnung beinhaltet im mittleren Teil eine Darstellung einer Verbrennungstaktfolge. Darüber sind in einem Diagramm schematisch Drehzahländerungen über der Zeit für unterschiedliche Betriebsverhältnisse dargestellt. Darunter ist eine Zuordnung zwischen Verbrennungstakten V1, V2 und V3 gemäß Gleichung (1) und tatsächlich aufeinanderfolgenden Verbrannungstakten dargestellt.

Beschreibung von Ausführungsbeispielen

Ausführungsbeispiele werden anhand der beigefügten Figur erläutert. In dieser sind in der Mitte gestaffelt Zeitspannen T1 - T12 aufgetragen. Jede Zeitspanne erstreckt sich von einer von zwei Segmentmarken S1 und S2 zur anderen. Diese Segmentmarken sind auf der Abszisse des oben in der Figur dargestellten Diagramms aufgetragen. Die Segmentmarken befinden sich auf einem Geberrad, das sich synchron mit der Kurbelwelle dreht. Auf einem Geberrad an einem Vierzylindermotor sind zwei Segmentmarken vorhanden, auf einem solchen für einen Sechs-Zylinder-Motor drei Segmentmarken, usw. Die Marken werden von einem Sensor abgetastet, der dementsprechend bei einem Vier-Zylinder-Motor alle 180° Kurbelwellenwinkel ein Signal ausgibt, bei einen Sechs-Zylinder-Motor alle 120°, usw. Es sei angenommen, daß die Segmentmarken so liegen, daß ein Signal vom zugehörigen Sensor immer dann abgegeben wird, wenn ein Zylinder den oberen Totpunkt vor einem Verbrennungstakt erreicht (ein anderer Zylinder erreicht dann den oberen Totpunkt vor einem Ansaugtakt).

Es wird darauf hingewiesen, daß es für die Funktion der im folgenden beschriebenen Verfahren nicht darauf ankommt, ob das Vorliegen eines bestimmten Kurbelwellenwinkels mit Hilfe von Segmentmarken festgestellt wird, und falls doch, wo solche Segmentmarken liegen. Wichtig ist nur, daß für jeden Verbrennungstakt ein Winkelbereich erkannt werden kann, innerhalb dem der Verbrennungstakt liegt. Zum Vereinfachen des Erläuterns der Verfahren wird jedoch angenommen, daß Segmentmarken vorhanden sind, und diese die im vorigen Absatz erläuterte Lage in bezug auf Arbeitstakte aufweisen. Weiterhin zur vereinfachten Veranschaulichung wird im folgenden von einem Vier-Zylinder-Motor mit zwei Segmentmarken ausgegangen. Bei einem Sechs-Zylinder-Motor wären drei Segmentmarken vorhanden, usw.

Die Zeitspannen T1 - T12 sind Zeitspannen, innerhalb denen gleiche Winkelspannen überbrückt werden, nämlich die Winkelspannen zwischen zwei benachbarten Segmentmarken. Die Zeitspannen T1 - T12 variieren daher abhängig von der Drehzahl und abhängig von Laufunruheeffekten. Es wird davon ausgegangen, daß sich im betrachteten Zeitabschnitt, in dem die Zeitspannen T1 - 12 liegen, die Drehzahl nur wenig ändert. Die Zeitspannen liegen dann alle in einem engen Bereich mit einer Toleranz von wenigen Promille um den gemeinsamen Mittelwert.

Bei allen Verfahren wird die eingangs erläuterte Gleichung (1) für Laufunruhewerte LUW verwendet.

Zunächst sei die älteste bekannte Methode erläutert, die auf Gleichung (1) basiert, nämlich das aus dem oben genannten Artikel von V. Bianchi et al. erläuterte Verfahren. Hier werden für $T\_V1$, $T\_V2$ und $T\_V3$ jeweils direkt aufeinanderfolgende Zeitspannen verwendet, also zunächst T1 - T3, dann T2 - T4, dann T3 - T5, usw. Die erste Gleichung lautet somit:

$$LUW = 1/(T1)^3 \times |(T2 - T1) - (T3 - T2)|.$$

In jeder folgenden Gleichung ist jeweils jede Ziffer hinter jedem "T" um Eins erhöht. Alle Werte werden gleitend gemittelt. Die berechneten Laufunruhewerte können in verschiedenen Verfahren weiterverwendet werden; jedoch gibt der Artikel kein Verfahren konkret an.

Bei der zweiten bekannten Methode, gemäß dem oben erwähnten Verfahren von Geiger et al., zum Feststellen von Laufunruhe individuell für jeden Zylinder sind die Zeitspannen T_V1, T_V2 und T_V3 jeweils Zeitspannen aufeinanderfolgender Verbrennungstakte für denselben Zylinder. Für den Zylinder mit der Nummer 1 sind dies die Zeitspannen T1, T5 und T9, so daß sich Gleichung (1) wie folgt liest:

$$LUW = f(T) \times |(T5 - T1) - (T9 - T5)|$$

mit: $f(T) = 1/(T1)^3$ oder $= 1/(T1 \times T5 \times T9)$
In der folgenden Gleichung für denselben Zylinder sind die Ziffern hinter jedem "T" jeweils um Vier erhöht. Aufeinanderfolgende Laufunruhewerte für jeweils einen Zylinder werden gleitend gemittelt. Die Laufunruhewerte werden in einer Leerlaufregelung eingesetzt.

Probleme, die mit diesem Verfahren auftreten, werden nun mit Hilfe des schematischen Diagramms erläutert, wie es oben in der Figur dargestellt ist. Dort ist eingezeichnet, wie sich die mittlere Drehzahl n stetig leicht ansteigend mit zunehmender Zeit erhöht. Im schematischen Diagramm ist angenommen, daß der leichte Drehzahlanstieg in den ersten vier Verbrennungstakten mit den Zeitspannen T1 - T4 störungsfrei erfolgt. Die Zeitspannen sind dann zunehmend kürzer, mit demselben Verkürzungswert von Spanne zu Spanne. Dies führt dazu, daß der Ausdruck innerhalb der Betragszeichen in Gleichung (1) zu Null wird, vorausgesetzt, daß die winkelmäßigen Abstände von Zeitspannen, mit denen die Differenzwerte in den runden Klammern gebildet werden, für beide Ausdrücke in den runden Klammern jeweils gleich ist. Diese Bedingung ist nur für die zweite bekannte Methode exakt erfüllt, da dort Anfang und Ende einer jeden Zeitspanne für jeweils einen Zylinder durch dieselben Segmentmarken bestimmt wird. Bei der ersten Methode werden dagegen zum Bestimmen der aufeinanderfolgenden Zeitspannen unterschiedliche Segmentmarken verwendet, wodurch sich Toleranzen in den Lagen der Segmentmarken auf das Berechnen der Laufunruhewerte LUW auswirken.

Ein weiteres Problem sei ausgehend vom mittleren Teil im schematischen Diagramm erläutert, also demjenigen Teil, der die Zeitspannen T5 - T8 enthält. In diesem Bereich ist dem stetigen leichten Drehzahlanstieg eine Drehzahlschwingung aufgrund von Verbrennungsaussetzern im ersten Zylinder überlagert. Jeder Verbrennungsaussetzer hat zur Folge, daß die Drehzahl in der Zeitspanne T5 absinkt, so daß diese Zeitspanne etwas länger wird als die vorige Zeitspanne T4. Nachdem die Drehzahl wegen des Verbrennungsaussetzers im Zylinder Nr. 1 abgefallen ist, benötigt sie wieder etwas Zeit zum Ansteigen, weswegen auch noch die Verbrennungstaktzeitspanne T6 für den Zylinder Nr. 2 wegen abgefallener Drehzahl verlängert ist. Aufgrund von Regelvorgängen findet dann ein überschwingen statt, weswegen der Motor während der Verbrennungstakte für die Zylinder mit den Nr. 3 und 4 etwas schneller dreht, als es der mittleren Drehzahl entspricht. Die Zeitspannen T7 und T8 sind daher gegenüber der mittleren Zeitspanne verkürzt. Diese Tatsache, daß von einem Verbrennungsaussetzer nicht nur derjenige Zylinder betroffen ist, in dem der Aussetzer stattfindet, sondern daß von einer Drehzahlabsenkung durch den Aussetzer insbesondere auch der folgende Zylinder betroffen ist, hat zur Folge, daß dann, wenn zum Bilden der Differenzen von Verbrennungstaktzeitspannen direkt aufeinanderfolgende Zeitspannen verwendet werden, wie bei der bekannten Methode 1, Aussetzereffekte nicht deutlich genug erkannt werden.

Ein drittes Problem, und zwar das für die Praxis schwerwiegendste, wird nun anhand des dritten Abschnitts im schematischen Diagramm erläutert, nämlich dem Abschnitt mit den Verbrennungstaktzeitspannen T9 - T12. Hier ist angenommen, daß die Drehzahl n etwas um die leicht ansteigende mittlere Drehzahl schwankt, jedoch nicht wegen Aussetzern, sondern weil von den Antriebsrädern von holprigem Grund her Drehmomentschwingungen auf die Kurbelwelle übertragen werden. Im schematischen Diagramm ist angenommen, daß die Amplitude der übertragenen Schwingung in etwa der Amplitude einer Schwingung entspricht, wie sie durch Zylinderaussetzer hervorgerufen wird, daß aber die Frequenz der Schwingung geringfügig höher ist als die Frequenz der Zylinderaussetzer-Drehzahlschwingung, jedoch sehr ähnlich zur Frequenz der letzteren Schwingung. Es ergeben sich dann bei den herkömmlichen Methoden Laufunruhewerte LUW, die mit solchen vergleichbar sind, wie sie durch Verbrennungsaussetzer hervorgerufen werden. Die bekannten Methoden liefern somit auch dann ein Signal, das Aussetzer anzeigt, wenn das Fahrzeug mit der überwachten Brennkraftmaschine über stark holprigen Untergrund fährt. Die herkömmlichen Verfahren versuchen dann fälschlicherweise, durch Verändern der Kraftstoffzumessung die Laufunruhe zu reduzieren. Das Fahrzeug wird dann in der Regel langsamer, und zwar so lange, bis die Störschwingungen in einen Frequenzbereich geraten, in dem sie auf die Laufunruhemessung keinen störenden Einfluß mehr haben. Das Fahrzeug wird dann wieder so lange schneller, bis sich die Laufunruhe wieder erhöht. Eine derartige Regelung aufgrund eines falsch ausgelegten Effektes ist offensichtlich unerwünscht.

Der eben genannte Mangel wird dadurch überwunden, daß Laufunruhewerte gemäß Gleichung (1) mit Zeitspannen für unterschiedliche Gruppen von Zylindern berechnet werden, der Maximalwert und der Minimalwert der berechneten Gruppenwerte bestimmt werden, die Differenz zwischen Minimalwert und Maximalwert berechnet wird und auf Aussetzer dann erkannt wird, wenn die Differenz einen vorgegebenen Schwellenwert DLUWS übersteigt. Die Beispiele 1 und 3 - 5 gemäß der Figur arbeiten nach diesem Verfahren.

Bei Beispiel 1 wird eine erste Gruppe von Laufunruhewerten gebildet, die die in ihrem Verbrennungstakt direkt aufeinanderfolgenden Zylinder 1, 2 und 3 erfaßt. Für den ersten Wert in dieser Gruppe gilt:

$$LUW(G1) = f(T) \times |(T2 - T1) - (T3 - T2)|\grave{}$$

Zum Berechnen der folgenden Werte dieser Gruppe ist jede Ziffer hinter jedem "T" jeweils um den Wert 4 erhöht. Alle aufeinanderfolgenden Werte werden gleitend gemittelt, wobei vorzugsweise in niedrigen Lastbereichen über mehr Werte gemittelt wird als in hohen Lastbereichen, z. B. über etwa 150 Werte in unteren Lastbereichen und etwa 50 Werte in oberen Lastbereichen. Eine derartige Mittelwertbildung wird auch bei allen folgenden Beispielen durchgeführt.

Für die Laufunruhewerte in der zweiten Gruppe gilt:

$$LUW(G2) = f(T) \times |(T3 - T2) - (T4 - T3)|.$$

In allen folgenden Werten für diese Gruppe ist wiederum jede Ziffer hinter jedem "T" um 4 erhöht. Alle Werte dieser Gruppe werden wieder gleitend gemittelt.

Es könnten noch zwei weitere Gruppen gebildet werden, nämlich diejenigen, in denen die drei aufeinanderfolgenden Zylinder mit dem Zylinder Nr. 3 beginnen und diejenige, in denen die drei aufeinanderfolgenden Messungen mit dem Zylinder 4 beginnen.

Unabhängig davon, ob nur zwei Gruppen oder drei oder vier gebildet werden, ist von Bedeutung, daß alle Laufunruhewerte einer Gruppe gleitend gemittelt werden, so daß ständig so viele Laufunruhewerte wie Gruppen vorliegen. Bei der bekannten Methode 1 wurden dagegen alle Werte zu einem einzigen gleitenden Mittelwert zusammengefaßt und mit einem Schwellenwert verglichen. Beim Verfahren gemäß Beispiel 1 wird dagegen aus den gleitenden Mittelwerten für die einzelnen Gruppen der Maximalwert und der Minimalwert berechnet, was jedoch einen konkreten Rechenvorgang offensichtlich nur dann erfordert, wenn mehr als zwei Gruppen gebildet werden. Der Maximalwert und der Minimalwert werden voneinander abgezogen. Wenn nur zwei Gruppen vorhanden sind, wie in der Figur zu Beispiel 1 dargestellt, werden lediglich die zwei vorhandenen Gruppenwerte voneinander abgezogen. Die Differenz DLUW zwischen Minimalwert LUW_min und Maximalwert LUW_max wird mit einem Differenzschwellenwert DLUWS verglichen. Wenn die Differenz DLUW über den Schwellenwert DLUWS steigt, wird ein Aussetzer erkannt.

Beim Auswerten der Gleichungen zum Berechnen der Laufunruhewerte LUW kann ein wie herkömmlich berechneter Faktor f(T) verwendet werden, also ein Faktor, der das Produkt aus den drei jeweils gemessenen Zeitspannen darstellt, oder der der dritten Potenz einer der drei gemessenen Zeitspannen entspricht.

Vorteilhafter ist es jedoch, als Faktor nur einen solchen zu verwenden, der die Zeit in erster Potenz enthält, nämlich den Faktor 1/T, mit T = T_V1 , T_V2 oder T_V3, bevorzugt T_V2. Die mit Hilfe dieses Faktors gemäß Gleichung (1) berechneten Laufunruhewerte LUW werden in üblicher Weise gemittelt. Dabei kann eine Gruppenbildung ausgeführt werden, wie anhand von Beispiel 1 erläutert, wonach der berechnete Differenzwert mit einem betriebspunktabhängigen Schwellenwert verglichen wird, der vorzugsweise aus einem Kennfeld ausgelesen wird, das insbesondere über Werte von Last und Drehzahl adressierbar ist. Die Verknüpfung aufeinanderfolgender Laufunruhewerte LUW kann jedoch auch nach der bekannten Methode 1 oder der bekannten Methode 2 erfolgen, jedoch mit dem Unterschied in der Auswertung, daß nicht mit einem festen Schwellenwert verglichen wird, sondern ebenfalls mit einem betriebspunktabhängigen Schwellenwert. In allen Fällen hat das Verwenden eines Faktors der genannten Art und das Vergleichen mit einem betriebspunktabhängigen Schwellenwert den Vorteil erhöhter Zuverlässigkeit und zusätzlich den Vorteil erhöhter Rechengeschwindigkeit.

Beim Verfahren gemäß Beispiel 1 besteht noch das oben genannte Problem, daß die berechneten Laufunruhewerte LUW nicht nur von unterschiedlichen Verbrennungszeitspannen abhängen, sondern auch von unterschiedlichen relativen Lagen der Segmentmarken aufgrund mechanischer Toleranzen. Diese Toleranzen lassen sich dann ausschließen, wenn Verfahren verwendet werden, wie sie nun anhand der Beispiele 2 und 3 erläutert werden.

Beim Verfahren gemäß Beispiel 2 werden zum Auswerten von Gleichung (1) drei Zeitspannen verwendet, deren Messung jeweils bei derselben Segmentmarke beginnt. Es sind die Zeitspannen T1 , T3 und T5. Für alle diese Zeitspannen beginnt die Zeitmessung bei Erreichen der Segmentmarke S1 und sie endet bei Erreichen der Segmentmarke S2. Bei diesem Verfahren werden nur Messungen von Zeitspannen für die Zylinder mit den Nr. 1 und 3 verwendet. Dennoch können Aussetzer auch dann festgestellt werden, wenn sie durch Aussetzer in den Zylindern mit den Nr. 2 oder 4 bedingt ist. Dies anhand der oben ausgehend vom mittleren Abschnitt im Diagramm beschriebenen Zusammenhänge.

Beispiel 2 kann u. a. dahingehend abgewandelt werden, daß außer der in der Figur dargestellten Verbrennungstaktauswahl eine solche verwendet wird, die jeweils um einen Takt versetzte Werte ausnutzt, also bei der ersten Auswertung die Zeitspannen T2, T4 und T6. Alle Laufunruhewerte LUW aus den beiden Zylindergruppen können gleitend gemittelt und jeweils mit einem Schwellenwert verglichen werden.

Eine andere Weiterbildung des Beispiels 2 wird nun mit Hilfe von Beispiel 3 erläutert. Beispiel 3 stellt eine Kombination der Prinzipien dar, wie sie anhand der Beispiele 1 und 2 erläutert wurden. Es werden nämlich die Laufunruhewerte verschiedener Gruppen einzeln gemittelt, wie anhand von Beispiel 1 erläutert, und für die Zeitspannen in den einzelnen Gruppen werden solche verwendet, deren Beginn und Ende jeweils durch dieselben Segmentmarken festgelegt sind. Für den Laufunruhewert LUW (G1) in der ersten Gruppe G1 gilt:

$$LUW\ (G1)\ =\ f(T)\ \times\ |(T3 - T1) - (T5 - T3)|.$$

Zum Berechnen der folgenden Laufunruhewerte in derselben Gruppe werden diejenigen Zeitspannen verwendet, die jeweils vier Zeitspannen hinter den in der eben angegebenen Gleichung aufgeführten Zeitspannen liegen.

Für die Laufunruhewerte in der zweiten Gruppe G2 gilt:

$$LUW\ (G2)\ =\ f(T)\ \times\ |(T4 - T2) - (T6 - T4)|.$$

Für die folgenden Werte gilt das eben für die Werte von Gruppe G1 Ausgeführte entsprechend. Die Zeitspannen zum Berechnen von Laufunruhewerten für zwei weitere Gruppen G3 und G4 sind jeweils um eine weitere Zeitspanne gegenüber den eben genannten Zeitspannen versetzt, wie dies in der Figur bei Beispiel 3 dargestellt ist. Die Laufunruhewerte aus den vier Gruppen G1 - G4 werden gleitend gemittelt, es werden der Minimal- und der Maximalwert dieser vier Gruppenwerte bestimmt, aus diesen beiden Werten wird die Differenz gebildet, und es wird ein Aussetzer erkannt, wenn die Differenz einen Schwellenwert übersteigt. Vorzugsweise wird für f(T) wieder die Funktion 1/T verwendet, und als Schwellenwerte werden betriebspunktabhängige Werte verwendet, die aus einem Kennfeld ausgelesen werden. Als Zeitspanne T zum Berechnen von 1/T wird vorzugsweise die mittlere Zeitspanne der drei Zeitspannen verwendet, wie sie jeweils in Gleichung (1) eingehen.

Das Verfahren gemäß Beispiel 4 nutzt die vier Gruppen G1 - G4 von Beispiel 3 und nutzt darüber hinaus zwei weitere Gruppen G5 und G6. Die Gruppe G5 geht dabei aus Gruppe G1 dadurch hervor, daß die mittlere Verbrennungstaktzeitspanne um eine Zeitspanne zur ersten Zeitspanne hin verschoben ist, also direkt an diese anschließt. Dafür besteht zur dritten Zeitspanne eine Differenz von zwei Zeitspannen. In Gruppe G5 ist gegenüber Gruppe G1 nicht mehr für alle Zeitspannen, sondern nur noch für zwei der drei Zeitspannen der Vorteil vorhanden, daß zwischen denselben Segmentmarken gemessen wird. Es besteht jedoch der neue Vorteil, daß in die Auswertung zwei direkt aufeinanderfolgende Zeitspannen eingehen, was die Möglichkeit verbessert, auch Verbrennungsaussetzer in gegenüberliegenden (um 360° gegeneinander versetzten) Verbrennungstakten feststellen zu können. Die Gleichung für den ersten Laufunruhewert in Gruppe G5 lautet:

$$LUW\ (G5)\ =\ f(T)\ \times\ |(T2 - T1) - (T5 - T2)|.$$

Die Werte für Gruppe G6 gehen aus Gruppe G3 entsprechend hervor, wie die Werte für Gruppe G5 aus denen für Gruppe G1 hervorgingen; es ist nämlich jeweils der zweite verwendete Verbrennungszeitspannenwert der um eine Zeitspanne früher liegende Wert. Durch die zwei Gruppen G5 und G6 sind Verbrennungszeitspannen für alle vier Zylinder erfaßt. Es bringt nur noch eine geringe Verbesserung der Aussagegenauigkeit, wenn weitere Gruppen gebildet werden, die aus den Gruppen G2 und G4 in entsprechender Weise hervorgehen, wie die Gruppen G5 und G6 aus den Gruppen G1 bzw. G3 hervorgingen.

Die letztzitierte Gleichung für Laufunruhewerte LUW (G5) wird zweckmäßigerweise noch modifiziert, um bei fehlender Laufunruhe den Wert Null zu erhalten. Dadurch, daß die Zeitspannen T2 und T1 direkt aufeinanderfolgen, zwischen den Zeitspannen T5 und T2 aber eine Lücke von zwei Zeitspannen besteht, ergibt sich bei leichter Beschleunigung das Problem, daß auch bei fehlender Laufunruhe die Differenzwerte (T2 - T1) und (T5 - T2) nicht gleich sind und sich dadurch ein Differenzwert ungleich Null ergibt. Um dies zu vermeiden, werden die Klammerausdrücke im umgekehrten Verhältnis des Abstandes der in ihnen enthaltenen Zeitspannen gewichtet. Besteht jeweils eine Lücke von einer Zeitspanne, wie bei den Klammerausdrücken für die Gruppen G1 - G4, ist der Gewichtungsfaktor 1. Ist der Abstand zwischen den zwei Anfängen der in einem Klammerausdruckv erwendeten Zeitspannen nur in etwa halb so groß, d. h. schließen die Zeitspannen unmittelbar aneinander an, ist der Gewichtungsfaktor 2. Ist der Abstand dagegen doppelt so groß, ist der Gewichtungsfaktor 0,5. Die mit den Gewichtungsfaktoren modifizierte Gleichung für LUW (G5) ist damit die folgende:

$$LUW (G5) = f(T) \times |(2 \times (T2 - T1) - 0,5 \times (T5 - T2))|.$$

Beispiel 5 unterscheidet sich von Beispiel 4 dadurch, daß noch zwei weitere Gruppen G7 und G8 verwendet werden. Gruppe G7 geht aus Gruppe G1 ähnlich hervor, wie Gruppe G5 aus Gruppe G1 hervorging. Der Unterschied besteht darin, daß nun die mittlere Verbrennungszeitspanne nicht um eine Zeitspanne nach vorne, sondern um eine Zeitspanne nach hinten gerückt ist, daß also für den ersten Wert die Zeitspannen T1, T4 und T5 verwendet werden. Unter Berücksichtigung der erläuterten Gewichtung ergibt sich damit für den ersten Wert in Gruppe G7:

$$LUW (G7) = f(T) \times |(2 \times (T4 - T1) - 0,5 \times (T5 - T4))|.$$

Für alle weiteren Laufunruhewerte in Gruppe G7 werden Zeitspannen verwendet, die jeweils um vier Zeitspannen hinter den entsprechenden beim Berechnen des vorigen Wertes verwendeten Zeitspannen liegen.

Gruppe G8 geht aus Gruppe G3 entsprechend hervor, wie Gruppe G7 aus Gruppe G1. Die mittlere Zeitspanne liegt wiederum nicht mehr genau in der Mitte zwischen der ersten und der letzten Verbrennungszeitspanne, sondern ist um eine Zeitspanne nach hinten versetzt. Für den ersten Wert werden also die Zeitspannen T3, T6 und T7 verwendet. Außer den Gruppen G7 und G8 könnten noch Gruppen verwendet werden, die nicht mit Zeitspannen für die Zylinder mit den Nr. 1 bzw. 3 beginnen, sondern die mit Zeitspannen für die Zylinder Nr. 2 bzw. 4 starten.

Beim Beispiel 5 werden fortlaufend die gleitenden Mittelwerte für die Gruppen G1 - G8 gebildet, der Minimalwert und der Maximalwert aus diesen gleitenden Mittelwerten werden bestimmt, die Differenz aus dem jeweils aktuellen Mittelwert und dem jeweils aktuellen Maximalwert wird gebildet, und es wird ein Aussetzer erkannt, wenn die Differenz einen Schwellenwert übersteigt. Für die vorteilhafte Wahl des Faktors f(T) und die Art des Schwellenwerts gilt das oben mehrfach Erläuterte.

Je mehr Gruppen für die geschilderte Auswertung verwendet werden, desto sicherer lassen sich Verbrennungsaussetzer auch in gegenüberliegenden Zylindern feststellen und desto weniger störanfällig ist das Verfahren in bezug auf Unruheeffekte, die von den Antriebsrädern her auf die Kurbelwelle übertragen werden.

Unabhängig davon, wieviele Zylinder ein Motor aufweist, werden vorzugsweise Gruppen verwendet, innerhalb denen alle verwendeten Verbrennungszeitspannen zwischen denselben Segmentmarken gemessen werden. Bei einem Viertaktmotor ist diese Bedingung für jeden zweiten Verbrennungstakt erfüllt, für einen Sechs-Zylinder-Motor für jeden dritten Takt und für einen Acht-Zylinder-Motor für jeden vierten Takt. Um Aussetzer bei zwei gegenüberliegenden Zylindern zuverlässig erkennen zu können,

werden zusätzlich Gruppen verwendet, in denen die eben genannte Bedingung nicht mehr für alle Zeitspannen gilt. Es ist vielmehr die mittlere der jeweils verwendeten drei Zeitspannen nach vorne oder nach hinten verschoben. Bei einem Vier-Zylinder-Motor kann jeweils nur ein Verschieben um eine Zeitspanne nach vorne bzw. eine Zeitspanne nach hinten erfolgen. Bei einem Sechs-Zylinder-Motor können dagegen zusätzliche Gruppen dadurch gebildet werden, daß die jeweils mittlere Zeitspanne eine solche ist, die von der genau mittleren Lage durch Verschieben um eine bzw. zwei Zeitspannen nach vorne bzw. nach hinten abweicht. Bei einem Acht-Zylinder-Motor kann zusätzlich ein Verschieben um drei Zeitspannen nach vorne bzw. hinten genutzt werden.

Zum Umgehen der im Stand der Technik auftretenden Probleme werden also vier Prinzipien verwendet, zu denen anhand der Ausführungsbeispiele erläutert ist, daß sie gemeinsam, aber auch einzeln, eingesetzt werden können. Es handelt sich um die folgenden Prinzipien:

1. Statt Zeitspannen für die Verbrennungstakte eines jeweils gleichen Zylinders oder direkt aufeinanderfolgender Zylinder werden Zeitspannen für die Verbrennungstakte von Zylindern gemessen, von denen mindestens zwei nicht benachbarte Zylinder sind (Ausschließen von mechanischen Fehlern bei Marken zum Auslösen der Zeitspannenmessungen).

2. Es werden einzelne Gruppen von Laufunruhewerten gebildet und die Differenz zwischen Maximal- und Minimalwert der Gruppenwerte wird berechnet.

3. In der Auswertungsgleichung wird, unabhängig davon, ob diese ansonsten mit Verbrennungszeitspannenwerten gemäß herkömmlicher Auswahl oder gemäß Auswahl der eben genannten Punkten 1 und/oder 2 erfolgt, ein Faktor verwendet, der nur zur ersten Potenz der Zeit umgekehrt proportional ist.

4. In Anwendung der Meßprinzipien 1 - 3 zur Aussetzererkennung werden die Laufunruhewerte oder Laufunruhe-Differenzwerte mit Schwellwerten verglichen. Werden mit Hilfe eines Faktors 1/T berechnete Laufunruhewerte oder Laufunruhegruppewerte oder Laufunruhe-Differenzwerte mit betriebspunktabhängigen Schwellenwerten verglichen, ergibt sich erhöhte Aussagegenauigkeit und gleichzeitig wird die Rechengeschwindigkeit erhöht, da keine dritte Potenz einer Zeitspanne mehr zu bilden ist.

Die Ausführungsbeispiele betreffen die Anwendung der Meßverfahren auf die Aussetzererkennung. Die berechneten Laufunruhewerte oder Laufunruhe-Differenzwerte können aber auch z. B. zur Leerlaufregelung, einer anderen Rundlaufregelung oder zum Erkennen von Laufunruhe durch starke Streuungen in Eigenschaften von Einspritzventilen und deren Ansteuerung verwendet werden.

Bei der vorstehenden kurzen Schilderung von Prinzip 4 ist von betriebspunktabhängigen Schwellenwerten die Rede. Es wird darauf hingewiesen, daß vorteilhafterweise die Schwellenwerte nicht nur vom Betriebspunkt, sondern auch von der jeweiligen Motortemperatur abhängen, die bei Brennkraftmaschinen in der Regel mit der Kühlwassertemperatur gleichgesetzt wird. Bei tiefen Temperaturen ist der Schwellenwert einige 10 % höher als bei der Endtemperatur von etwa 80 °C. Dadurch soll verhindert werden, daß unrunder Motorlauf bei tiefen Motortemperaturen fälschlicherweise zu Aussetzererkennung führt. Zum Verhindern irrtümlicher Laufunruheerkennung sind auch die folgenden Maßnahmen von Vorteil , die alle einzeln oder gemeinsam eingesetzt werden können, auch gemeinsam mit der eben beschriebenen Maßnahme. Werden schnelle Laständerungen festgestellt, wird die Laufunruheerkennung grundsätzlich unterdrückt. Als schnelle Laständerung wurde bei einem Ausführungsbeispiel ein Verstellen der Drosselklappe um mindestens 50 % innerhalb von etwas weniger als einer Sekunde definiert. Wie die Bedingung "schnelle Laständerung" am besten für einen jeweiligen Anwendungsfall festzulegen ist, ist durch Versuche zu bestimmen.

Ein Unterdrücken der Aussetzererkennung findet auch innerhalb einer Einschwingzeitspanne nach dem Motorstart statt. Diese Zeitspanne beträgt typischerweise einige wenige Sekunden. Auch hier ist der für den jeweiligen Anwendungsfall beste Wert durch Versuche zu bestimmen.

Fehler beim Feststellen von Laufunruhewerten können auch durch Störsignale hervorgerufen sein. Um derartige Fehler nach Möglichkeit zu vermeiden, wird vorteilhafterweise wie folgt verfahren. In einem vom meßtechnischen Sinn her optimal arbeitenden System werden Aussetzer erzeugt und werden Störungen über den Antriebsstrang eingeleitet, die zu maximalen Laufunruhewerten führen, wie sie in der Praxis auftreten können. Diese Werte werden als Höchstwerte für akzeptierbare Laufunruhewerte festgelegt. Treten im Betrieb eines Kraftfahrzeugs größere Laufunruhe-Einzelwerte auf, z. B. durch Sensorstörsignale, werden diese Werte auf den Höchstwert begrenzt, bevor das weiter oben beschriebene Mitteln der Laufunruhewerte erfolgt. Dadurch wird verhindert, daß sich Störungen, die nicht durch Laufunruhe bedingt sind, nur schwach auf den gemittelten Wert auswirken.

**Patentansprüche**

1. Verfahren zum Messen von Laufunruhe bei einer Brennkraftmaschine, bei dem
   - für einen ersten Verbrennungstakt V1 die Zeitspanne T_V1 gemessen wird, in der sich die Kurbelwelle um eine vorgegebene Winkelspanne dreht,
   - für einen zweiten Verbrennungstakt V2 die Zeitspanne T_V2 gemessen wird, in der sich die Kurbelwelle um eine vorgegebene Winkelspanne dreht,
   - für einen dritten Verbrennungstakt V3 die Zeitspanne T_V3 gemessen wird, in der sich die Kurbelwelle um eine vorgegebene Winkelspanne dreht, und
   - Laufunruhewerte LUW berechnet und gemittelt werden, mit

     $$LUW = f(T) \times |(T\_V2 - T\_V1) - (T\_V3 - T\_V2)|,$$

   - wobei T zumindest eine der Zeitspannen T_V1, T_V2 oder T_V3 ist,
   dadurch gekennzeichnet, daß
   - die genannten Zeitspannen für die Verbrennungstakte von Zylindern gemessen werden , von denen mindestens zwei nicht benachbart sind ,
   - die genannten Laufunruhewerte mit Zeitspannen für unterschiedliche Gruppen von Zylindern berechnet werden,
   - der Maximalwert und der Minimalwert der berechneten Gruppenwerte bestimmt werden,
   - die Differenz zwischen Maximal- und Minimalwert berechnet wird, welche Differenz als Größe für das Ausmaß der Laufunruhe gewertet wird,

2. Verfahren nach Anspruch 1, **dadurch gekennzeichnet,** daß als nicht benachbarte Zylinder solche verwendet werden, denen nach Anfang und Ende der genannten Zeitspannen jeweils aufeinanderfolgend dieselben Kurbelwellenwinkelbereiche zugeordnet sind.

3. Verfahren nach Anspruch 2, **dadurch gekennzeichnet,** daß bei einer Brennkraftmaschine mit n Zylindern und n/2 Segmentmarken sich jeder Winkelbereich von einer Segmentmarke zur folgenden erstreckt.

4. Verfahren nach einem der Ansprüche 1 - 3, **dadurch gekennzeichnet,** daß die Laufunruhewerte LUW auf einen Maximalwert begrenzt werden.

5. Verfahren nach einem der Ansprüche 1 - 4, **dadurch gekennzeichnet,** daß die Laufunruheerkennung bei schneller Laständerung unterdrückt wird.

6. Verfahren nach einem der Ansprüche 1 - 5, **dadurch gekennzeichnet,** daß die Laufunruheerkennung während einer Einschwingzeitspanne nach dem Motorstart unterbunden wird.

7. Anwendung eines Verfahrens nach einem der Ansprüche 1 - 3, **dadurch gekennzeichnet,** daß der jeweils aktuelle gemittelte Laufunruhe-Differenzwert mit einem Differenzschwellenwert verglichen wird und auf das Vorliegen von Verbrennungsaussetzern geschlossen wird, wenn der gemittelte Laufunruhe-Differenzwert den Differenzschwellenwert übersteigt.

**Claims**

1. Method of measuring running irregularity in the case of an internal combustion engine, in which:
   - the time interval $T\_V1$ in which the crankshaft rotates about a predetermined angular range is measured for a first expansion stroke V1;
   - the time interval $T\_V2$ in which the crankshaft rotates about a predetermined angular range is measured for a second expansion stroke V2;
   - the time interval $T\_V3$ in which the crankshaft rotates about a predetermined angular range is measured for a third expansion stroke V3; and
   - running irregularity values LUW are calculated and averaged with

     $LUW = f(T) \times |(T\_V2 - T\_V1) - (T\_V3 - T\_V2)|;$

     T being at least one of the time intervals $T\_V1$, $T\_V2$ or $T\_V3$;

characterized in that:
   - said time intervals are measured for the expansion strokes of cylinders of which at least two are not adjacent;
   - said running irregularity values are calculated with time intervals for different groups of cylinders;
   - the maximum and minimum values of the calculated group values are determined;
   - the difference between the maximum and minimum values is calculated and evaluated as the value for the extent of the running irregularity.

2. Method according to Claim 1, characterized in that cylinders with which the same crankshaft angular ranges are associated in each case successively after the beginning and end of said time intervals are used as non-adjacent cylinders.

3. Method according to Claim 2, characterized in that each angular range extends from one segment mark to the next one in the case of an internal combustion engine having $\underline{n}$ cylinders and $\underline{n}/2$ segment marks.

4. Method according to any one of Claims 1 - 3, characterized in that the running irregularity values LUW are restricted to a maximum value.

5. Method according to any one of Claims 1 - 4, characterized in that the detection of running irregularity is suppressed when the load changes rapidly.

6. Method according to any one of Claims 1 - 5, characterized in that the detection of running irregularity is suppressed during a transient time interval after the engine has started.

7. Method according to any one of Claims 1 - 3, characterized in that the actual running irregularity differential value averaged in each case is compared with a differential threshold value and the existence of misfiring on combustion is established if the averaged running irregularity differential value exceeds the differential threshold value.

**Revendications**

1. Procédé pour mesurer les irrégularités de fonctionnement d'un moteur à combustion interne , selon lequel :
   - pour la première phase de combustion V1 on mesure l'intervalle de temps T__V1 dans lequel le vilebrequin est tourné d'un angle prédéterminé,

- pour une seconde phase de combustion V2, on mesure l'intervalle de temps T__V2 au cours duquel le vilebrequin décrit un angle prédéterminé,
- pour une troisième phase de combustion V3, on mesure l'intervalle de temps T__V3 au cours duquel le vilebrequin décrit un angle prédéterminé et,
- on calcule les valeurs des irrégularités de fonctionnement LUW et on forme la moyenne selon

$$LUW = f(T) \times |(T\_\_V2 - T\_\_V1) - (T\_\_V3 - T\_\_V2)|,$$

- T étant au moins l'un des intervalles de temps T__V1, T__V2 ou T__V3,

caractérisé en ce que :

- on mesure les intervalles de temps ci-dessus pour les phases de combustion de cylindres parmi lesquelles au moins deux cylindres ne sont pas voisins,
- on calcule les valeurs des irrégularités de fonctionnement avec des intervalles de temps pour des groupes différents de cylindres,
- on détermine la valeur maximale et la valeur minimale des groupes de valeur calculés,
- on calcule la différence entre la valeur maximale et la valeur minimale, différence qui est exploitée comme grandeur correspondant au degré d'irrégularité de fonctionnement.

2. Procédé selon la revendication 1, caractérisé en ce pour les cylindres non voisins, on utilise les cylindres auxquels sont associées après le début et la fin des intervalles de temps indiqués, chaque fois les mêmes plages d'angles de villebrequin successifs.

3. Procédé selon la revendication 2, caractérisé en ce que pour un moteur à combustion interne ayant n cylindres et n/2 repères de segment, chaque plage angulaire s'étend d'un repère de segment au repère suivant.

4. Procédé selon l'une des revendications 1-3 caractérisé en ce qu'on limite les valeurs des irrégularités de fonctionnement LUW à une valeur maximale.

5. Procédé selon l'une des revendications 1-4 caractérisé en ce qu'on supprime la reconnaissance des irrégularités de fonctionnement pour des variations rapides de charge.

6. Procédé selon l'une des revendications 1-5, caractérisé en ce qu'on supprime les reconnaissances des irrégularités de fonctionnement pendant un intervalle de temps de stabilisation après le démarrage du moteur.

7. Application d'un procédé selon l'une des revendications 1 à 3, caractérisé en ce que l'on compare la valeur de différence des irrégularités de fonctionnement, en moyenne, chaque fois instantanée à la valeur de seuil de différence et on conclut à l'existence de ratées de combustion, si la valeur moyenne des différences des irrégularités de fonctionnement dépasse le seuil de différence.

n

T1  T2  T3  T4  T7  T8  T9  T10  T12

T5  T6  T11

S1  S2  S1  S2  S1  S2  S1  S2  S1  S2  S1  S2  S1

| | |
|---|---|
| T1 | |
| T2 | |
| T3 | |
| T4 | |
| T5 | |
| T6 | |
| T7 | |
| T8 | |
| T9 | |
| T10 | |
| T11 | |
| T12 | |

bekannte Methode 1

| G | | | | | | | | | | | | |
|---|---|---|---|---|---|---|---|---|---|---|---|---|
| V1 | V2 | V3 | | V1 | V2 | V3 | | V1 | V2 | V3 | | |
| | V1 | V2 | V3 | | V1 | V2 | V3 | | V1 | V2 | V3 | |
| | | V1 | V2 | V3 | | V1 | V2 | V3 | | V1 | V2 | |
| | | | V1 | V2 | V3 | | V1 | V2 | V3 | | V1 | |

bekannte Methode 2

| G1 | V1 | | | | V2 | | | | V3 | | | | |
|---|---|---|---|---|---|---|---|---|---|---|---|---|---|
| G2 | | V1 | | | | V2 | | | | V3 | | | |
| G3 | | | V1 | | | | V2 | | | | V3 | | |
| G4 | | | | V1 | | | | V2 | | | | V3 | |

Beispiel 1

| G1 | V1 | V2 | V3 | | V1 | V2 | V3 | | V1 | V2 | V3 | | |
|---|---|---|---|---|---|---|---|---|---|---|---|---|---|
| | | V1 | V2 | V3 | | V1 | V2 | V3 | | V1 | V2 | |
| G2 | | V1 | V2 | V3 | | V1 | V2 | V3 | | V1 | V2 | V3 |
| | | | V1 | V2 | V3 | | V1 | V2 | V3 | | V1 | |

Beispiel 2

| G | V1 | | V2 | | V3 | | V1 | | V2 | | V3 | |
|---|---|---|---|---|---|---|---|---|---|---|---|---|

Beispiel 3

| G1 | V1 | | V2 | | V3 | | | V1 | | V2 | | |
|---|---|---|---|---|---|---|---|---|---|---|---|---|
| G2 | | V1 | | V2 | | V3 | | | V1 | | V2 | |
| G3 | | | V1 | | V2 | | V3 | | | V1 | | |
| G4 | | | | V1 | | V2 | | V3 | | | V1 | |

Beispiel 4

| G5 | V1 | V2 | | V3 | | V1 | V2 | | V3 | | |
|---|---|---|---|---|---|---|---|---|---|---|---|
| G6 | | V1 | V2 | | V3 | | V1 | V2 | | V3 | |

Beispiel 5

| G7 | V1 | | V2 | V3 | V1 | | V2 | V3 | | |
|---|---|---|---|---|---|---|---|---|---|---|
| G8 | | V1 | | V2 | V3 | | V1 | | V2 | V3 |